# EUROPEAN PATENT SPECIFICATION

(11) **EP 2 736 390 B1**
(45) Date of publication and mention of the grant of the patent: **14.09.2016**
(21) Application number: 12759231.9
(22) Date of filing: 25.07.2012
(51) Int. Cl.: A47J 31/46

(54) **A PRESSURE REGULATION VALVE AND RELATED MACHINE**
DRUCKREGELVENTIL UND ZUGEHÖRIGE MASCHINE
SOUPAPE DE RÉGULATION DE PRESSION ET MACHINE UTILISANT CETTE SOUPAPE

(30) Priority: 27.07.2011 IT TO20110678
(43) Date of publication of application: 04.06.2014
(73) Proprietor: Luigi Lavazza S.p.A., 10154 Torino (IT)
(72) Inventor: BUGNANO, Luca, 10154 Torino (IT); CABILLI, Alberto, 10154 Torino (IT); PINNA, Andrea, 10154 Torino (IT); DE MANGO, Carlo, 10154 Torino (IT); BOTTURA, Cesare, 10154 Torino (IT); BOTTURA, Alberto, 10154 Torino (IT)
(74) Representative: Bosotti, Luciano
(86) International application number: PCT/IB2012/053783
(87) International publication number: WO 2013/014618

(56) References cited:
- EP-A1- 1 915 932
- WO-A1-2012/004660
- US-A- 5 538 028
- US-A1- 2005 035 152

## Description

### Technical field

The present disclosure relates to pressure regulation valves.

In various embodiments, the disclosure may refer to pressure regulation valves that can be used in lines for supplying a liquid, e.g. water, to machines for the preparation of beverages, such as coffee.

### Technological background

In the machines for the preparation of beverages, for example coffee, lines for supplying a liquid (e.g. hot or cold water) are commonly used which are supplied by a pump, for example a vibration pump.

The preparation of beverages may require the pressure of the supplied liquid not to exceed a maximum level. This may be the case of machines for the preparation of beverages which make use of cartridges (or capsules or pods, according to other commonly used names in the field) containing a beverage precursor, for example coffee powder. In order to obtain such a result, a pressure regulation valve can be inserted into the line for supplying liquid under pressure.

In this application field, operative problems of various kinds arise, such as, for example:
- the pumping of the liquid takes place continuously or substantially continuously, with flow rate values which can vary even quite rapidly: for example, in the preparation of a beverage such as coffee, the water flow can reach in the first instants values of several hundreds of cm³/s, followed by a quick drop to values of about one cm³/s,
- as the liquid flows through the valve, a hiss can be clearly perceived which can be annoying, particularly in the machines for home use, and
- the liquid may contain lime or other substances which can sediment within the valve, possibly blocking the valve and preventing it from working properly.

Documents US 5 538 028 A and US 2005/035152 A1 describe manual release valves and are of some interest for the invention.

### Object and summary

The present invention has the object of providing a pressure regulation valve wherein the aforementioned drawbacks are dispensed with. According to the invention, such an object is achieved thanks to a valve having the features specifically set forth in the claims that follow.

The invention moreover concerns a related machine. The claims are an integral part of the technical disclosure of the invention provided herein.

### Brief description of the Figures

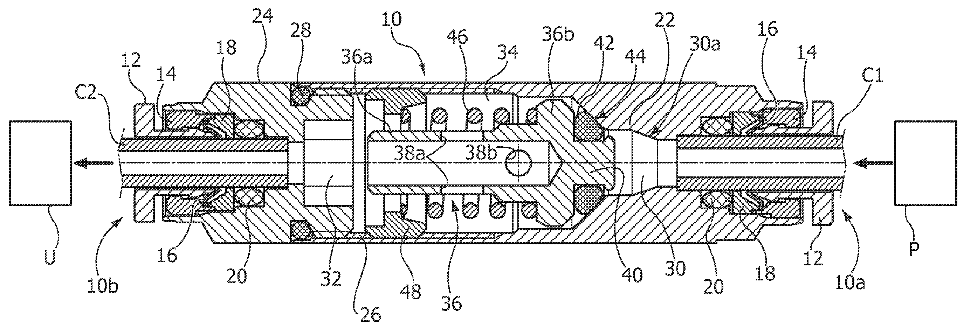

The invention will now be described, by way of non-limiting example only, with reference to the enclosed figure, which shows an axial section of an embodiment.

### Detailed description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment.
Furthermore, the particular features, structures, or characteristics may be combined in any suitable manner in one or more embodiments.

The headings provided herein are for convenience only and do not interpret the scope or meaning of the embodiments.

In the Figure, reference 10 denotes on the whole a pressure regulation valve adapted to be used, for example, in machines for the preparation of beverages.

In various embodiments, the valve 10 is adapted to be used in machines for the preparation of coffee, for example espresso coffee.

In various embodiments, the valve 10 is adapted to be used in machines for the preparation of coffee which make use of a substance contained in a capsule (or cartridge or portion, according to other commonly used names in the field).

In various embodiments, the valve 10 is adapted to be inserted into a conduit or line which supplies a utilization unit U with a pressurized liquid, for example water, coming from a source P.

In various embodiments, the source P may be a pump, for example a vibration pump.

In various embodiments, the utilization unit or module U ,may be a unit or module for the preparation of beverages on the basis of a substance, for example coffee powder, contained in a filter or in a capsule (or cartridge or portion).

Such sources and/or utilization units or modules are well known in the art in many different embodiments, which makes it unnecessary to provide a detailed description of these parts herein.

In various embodiments, on its input or intake side 10a the valve 10 may be connected to the source P via a first conduit portion Cl (for example a hose in a material admitted for contact with food).

In various embodiments, on its output or delivery side 10b, the valve 10 may be connected to the module or unit U via a second conduit portion (identical to or different from the conduit C1).

In various embodiments, the connection of the valve 10 with the conduits C1 and C2 on the intake side 10a and on the delivery side 10b may take place with quick coupling assemblies, which may be identical or different from each other.

The presently considered embodiment involves the use of quick coupling assemblies which are structurally identical on both sides, each of them comprising, from the outside towards the inside of the valve 10:
- a flanged bushing 12, which receives therewithin the end of the conduit C1 or C2,
- a ring nut 14, into which the bushing 12 is coupled,
- an elastic washer 16, for example of frusto-conical shape, receiving therewithin the end of the bushing 12 which faces the inside of the valve 10,
- a sleeve 18 for supporting the elastic washer 16, and
- an annular sealing element (O-ring).

According to known criteria, the flared shape of the end of bushing 12 and the cooperation thereof with the elastic washer 16, which is axially interposed between the ring nut 14 and the sleeve 18, ensure the retention of the conduit C1, C2 with respect to the valve 10.

In various embodiments, the body of valve 10 may include a metal material such as brass, while not excluding the possibility of using, at least for part of the valve 10, different materials such as plastics.

In various embodiments, the valve body may comprise two portions 22 and 24, for example coupled with each other through a threaded connection (via a thread denoted by 26) with the interposition, between the mutually facing mouth edges of the portions 22 and 24, of an annular sealing element 28, for example an O-ring, which is adapted to be compressed axially when both portions 22 and 24 are mutually coupled, for example by being screwed at 26.

References 30 and 32 denote two lumina present in the valve body 10 (for example, respectively, in the portion 22 and in the portion 24), which communicate respectively with the input (intake) 10a and with the output (delivery) 10b of the valve 10, both lumina 30 and 32 opening into a central chamber 34 wherein an obturator 36 is mounted.

In various embodiments, the obturator 36 may have the general shape of a mushroom, with a stem portion 36a and a head portion 36b.

In various embodiments, the stem portion 36a may be hollow, having therefore a tubular structure with passage lumina (for example two pairs of lumina 38a and 38b, arranged with an axial offset along the stem portion 36a and oriented in mutually perpendicular directions, having therefore an approximately cross-shaped arrangement) to allow the fluid coming from input lumen 30 to enter the stem portion 36a and to flow steadily towards lumen 32 and towards the conduit C2.

In various embodiments, the head portion 36b of the obturator 36 has, on the side opposite stem 36b, and therefore on the side facing the input lumen 30, a tang 40, around which an annular sealing element (once again possibly an O-ring) 42 is applied which is adapted to cooperate with an abutment surface 44.

In various embodiments, the abutment surface 44 may have a generally flared arrangement, i.e. a funnel shape. In various embodiments, the abutment surface 44 may have a frusto-conical shape.

The flared shape of abutment surface 44 starts diverging from the lumen 30 towards the chamber 34, i.e. in the liquid flow direction through the valve 10. In other words, the abutment surface 44 is a flared surface which diverges starting from the input lumen 30 towards the output lumen 32, and therefore has a "narrow" end, facing the lumen 30, and a "broad" end facing the chamber 34, i.e. towards the output lumen 32. The flaring is therefore an increase in diameter and a steady widening, while proceeding towards the chamber 34 and the output lumen 32.

In the exemplary embodiment illustrated, the lumen 30 itself has a portion 30a with a flared (i.e. funnel-like) shape, with a divergence concordant with the divergence of the abutment surface 44. In various embodiments, the portion 30a may have a frusto-conical shape. The flared shape of the portion 30a is divergent towards the chamber 34, with an increase in diameter and therefore in section in the liquid flow direction through valve 10.

Reference 46 denotes an elastic element, for example a coil spring enveloping the stem 36a, adapted to act onto obturator 36 in order to urge it towards the abutment surface 44, in the state wherein the sealing element 42 is pressed on abutment surface 44.

In various embodiments, the obturator 36 may be elastically urged against the abutment surface 44, and may be displaced away from the abutment surface 44 under the pressure of the liquid flowing into the valve 10 through the inlet 10a, so as to allow such a liquid to flow through the valve 10.

In various embodiments, the elastic element 46 may act between the head portion 36b of the obturator and an adjustment element 48, the axial position whereof with respect to the valve 10 is adjustable. In various embodiments, the adjustment element 48 may be a ring nut having an outer thread, adapted to cooperate with an axial extension of the thread 26 provided for coupling both parts 22 and 24 of the valve body 10.

In various embodiments, the element 48 can be shaped so as to be arranged around the stem 36a of the obturator, while being provided with openings which allow the liquid to flow through the element 46 itself.

Moreover, the adjustment element 48 may be provided with engaging formations (for example slots or holes) which allow for an engagement of the element 48, for example to cause it to rotate, so as to selectively vary the axial position thereof within the valve body 10.

In various embodiments, the element 48 provides for the ability to adjust the value of the elastic load applied by the elastic element 46 to the obturator 36 and, therefore, the value of the operating pressure of the valve 10.

In various embodiments, the adjustment element 48 may have, on the side facing the elastic element 46 (i.e. on the side facing the abutment surface 44), a receiving slot with a general basin shape (for example a frusto-conical shape, with two subsequent sections with different taper ratios) performing a self-centering function of the element 46.

When it is pressed against the abutment surface 44, the sealing element 42 can deform in a complementary way, and therefore have itself a "proximal" edge (with respect to the flow direction of the liquid through the valve 10) of the flared shape, for example a frusto-conical shape.

Essentially, the operation of the valve 10 involves, according to criteria known in themselves, when the source (pump) starts delivering the liquid at the valve intake side 10a, an increase of the related pressure, until the force of spring 46 is overcome. The obturator 36 (specifically the head section 36a with the sealing element 42) is displaced away from the abutment surface 44, and the liquid starts therefore to flow through the valve; downstream of the valve 10 the liquid takes on a pressure which is lower than the pressure upstream of the valve 10, because the valve 10 causes a pressure drop, i.e. a pressure regulation to a set value which can be varied (for example by acting on the element 48) by modifying the value of the load applied (for example by the spring 46) on the obturator 36.

For example, in the machines for the preparation of coffee, in the presence of a pump adapted to deliver liquid at a pressure of about 13 bar, the valve 10 can be set so that the pressure in the unit U (infusion chamber) reaches a value of about 6 bar, such a value remaining substantially unvaried (e.g. with a tolerance of 0,5 bar) throughout the delivery.

In various embodiments, the valve 10 may never interrupt the liquid flow, because the pressure induced by the pump can keep it always open. As previously stated, the flow of the liquid (for example water) can therefore be substantially continuous, with the possibility of wide variations of the flow rate value.

While not wishing to be bound to any specific theory on the subject, the Applicant has remarked that the flared shape of the abutment surface 44 (and, in the embodiments which provide it, the flared shape of the input lumen 30) counters the appearance of undesirable hissing sounds, which on the contrary may be present in the solutions wherein, in the path through valve 10, particularly at the obturator of the valve, the liquid undergoes flow deviations of 90°.

On the contrary, in various embodiments such as those presently considered, the liquid does not undergo any drastic change of the flow direction in the area where the valve obturator operates.

Various embodiments may moreover avoid negative effects due to the possible presence within the liquid (e.g. water) of materials which may cause sediments, for example lime.

Various embodiments may therefore ensure that, even after prolonged use, the valve 10 is still able to perform its pressure regulating function, without suffering from undesirable shutdowns.

Of course, without prejudice to the underlying principle of the invention, the details and the embodiments may vary, even appreciably, with respect to what has been described by way of non-limiting example only, without departing from the scope of the invention as defined by the annexed claims.

## Claims

1. A pressure regulation valve for lines for supplying a liquid for the preparation of beverages, the valve (10) including:
- an input lumen (30) for receiving said liquid,
- an output lumen (32) for delivering said liquid, and
- an obturator (36) elastically urged against an abutment surface (44), said obturator (36) being displaceable away from said abutment surface (44) by said liquid to allow the flow of liquid through the valve (10),
wherein:
- said abutment surface (44) is a flared surface which diverges starting from said input lumen (30) towards said output lumen (32),
- said input lumen (30) includes a divergent portion (30a) with a divergence concordant with the divergence of said abutment surface (44), and
- the valve includes an adjustment element (48) whose position relative to said valve (10) is adjustable to vary the elastic load applied on said obturator (36).

2. The valve of claim 1, wherein said abutment surface (44) is a frusto-conical surface.

3. The valve of claim 1, wherein said abutment surface (44) and said divergent portion (30a) of the input lumen are at a distance from each other.

4. The valve of any of the preceding claims, wherein said obturator (36) carries a sealing element (42), preferably an O-ring, to cooperate with said abutment surface (44).

5. The valve of any of the preceding claims, wherein said obturator (36) includes:
- a stem portion (36a) facing said output lumen (32) and a head portion (36b) facing said input lumen (30), and
- an elastic element (46), preferably a coil spring, acting on said stem portion (36a).

6. The valve of any of the preceding claims, wherein said obturator (36) has a hollow portion (36a) facing said output lumen (32), said hollow portion (36a) having openings (38a, 38b,) for the passage of said liquid through said hollow portion (36a).

7. The valve of claim 1, wherein said adjustment element (48) is externally provided with a thread and is rotatable to vary the axial position of the adjustment element with respect to the valve (10).

8. A machine for the preparation of beverages, such as coffee including a supply line (C1, C2) of a pressurized liquid having interposed therein a pressure regulation valve (10) according to any of claims 1 to 7.

## Patentansprüche

1. Druckregelventil für Leitungen zum Zuführen einer Flüssigkeit zur Herstellung von Getränken, wobei das Ventil (10) Folgendes enthält:
- einen Eingangshohlraum (30) zum Aufnehmen der Flüssigkeit,
- einen Ausgangshohlraum (32) zum Abgeben der Flüssigkeit,
- einen Verschluss (36), der elastisch gegen eine Anschlagsfläche (44) gedrückt wird, wobei der Verschluss (36) durch die Flüssigkeit von der Anschlagsfläche (44) weg geschoben werden kann, um das Fließen von Flüssigkeit durch das Ventil (10) zu ermöglichen,
wobei:
- die Anschlagsfläche (44) eine aufgeweitete Fläche ist, die beginnend am Eingangshohlraum (30) in Richtung des Ausgangshohlraums (32) divergiert,
- wobei der Eingangshohlraum (30) einen divergierenden Abschnitt (30a) mit einer Divergenz enthält, die mit der Divergenz der Anschlagsfläche (44) übereinstimmt, und
- das Ventil ein Einstellelement (48) enthält, dessen Position in Bezug auf das Ventil (10) einstellbar ist, um die elastische Last zu variieren, die auf den Verschluss (36) angewendet wird.

2. Ventil nach Anspruch 1, wobei die Anschlagsfläche (44) eine kegelstumpfförmige Fläche ist.

3. Ventil nach Anspruch 1, wobei die Anschlagsfläche (44) und der divergierende Abschnitt (30a) des Eingangshohlraums voneinander beabstandet sind.

4. Ventil nach einem der vorhergehenden Ansprüche, wobei der Verschluss (36) ein Dichtungselement (42), bevorzugt einen O-Ring, trägt, um mit der Anschlagsfläche (44) zusammenzuwirken.

5. Ventil nach einem der vorhergehenden Ansprüche, wobei der Verschluss (36) Folgendes enthält:
- einen Schaftabschnitt (36a), der dem Ausgangshohlraum (32) gegenüber liegt und einen Kopfabschnitt (36b), der dem Eingangshohlraum (30) gegenüber liegt, und
- ein elastisches Element (46), bevorzugt eine Spiralfeder, die auf den Schaftabschnitt (36a) einwirkt.

6. Ventil nach einem der vorhergehenden Ansprüche, wobei der Verschluss (36) einen hohlen Abschnitt (36a) aufweist, der dem Ausgangshohlraum (32) gegenüber liegt, wobei der hohle Abschnitt (36a) Öffnungen (38a, 38b,) zum Durchgang der Flüssigkeit durch den hohlen Abschnitt (36a) aufweist.

7. Ventil nach Anspruch 1, wobei das Einstellelement (48) extern mit einem Gewinde versehen und drehbar ist, um die axiale Position des Einstellelements in Bezug auf das Ventil (10) zu variieren.

8. Maschine zur Herstellung von Getränken, wie beispielsweise Kaffee, die eine Leitung zum Zuführen (C1, C2) einer mit Druck beaufschlagten Flüssigkeit enthält, die dazwischen eingefügt ein Druckregelventil (10) nach einem der Ansprüche 1 bis 7 aufweist.

## Revendications

1. Valve de régulation de pression pour des conduites prévues pour alimenter un liquide pour la préparation des boissons, la valve (10) comprenant :
- une lumière d'entrée (30) pour recevoir ledit liquide,
- une lumière de sortie (32) pour distribuer ledit liquide, et
- un obturateur (36) poussé élastiquement contre une surface de butée (44), ledit obturateur (36) pouvant être déplacé à distance de ladite surface de butée (44) par ledit liquide pour permettre l'écoulement du liquide à travers la valve (10),
dans laquelle :
- ladite surface de butée (44) est une surface évasée qui diverge à partir de ladite lumière d'entrée (30) vers ladite lumière de sortie (32),
- ladite lumière d'entrée (30) comprend une partie divergente (30a) avec une divergence qui concorde avec la divergence de ladite surface de butée (44), et
- la valve comprend un élément d'ajustement (48) dont la position par rapport à ladite valve (10) est ajustable afin de modifier la charge élastique appliquée sur ledit obturateur (36).

2. Valve selon la revendication 1, dans laquelle ladite surface de butée (44) est une surface tronconique.

3. Valve selon la revendication 1, dans laquelle ladite surface de butée (44) et ladite partie divergente (30a) de la lumière d'entrée sont à une distance l'une de l'autre.

4. Valve selon l'une quelconque des revendications précédentes, dans laquelle ledit obturateur (36) porte un élément d'étanchéité (42), de préférence un joint torique, afin de coopérer avec ladite surface de butée (44).

5. Valve selon l'une quelconque des revendications précédentes, dans laquelle ledit obturateur (36) comprend :
- une partie de tige (36a) faisant face à ladite lumière de sortie (32) et une partie de tête (36b) faisant face à ladite lumière d'entrée (30), et
- un élément élastique (46), de préférence un ressort hélicoïdal, agissant sur ladite partie de tige (36a).

6. Valve selon l'une quelconque des revendications précédentes, dans laquelle ledit obturateur (36) a une partie creuse (36a) faisant face à ladite lumière de sortie (32), ladite partie creuse (36a) ayant des ouvertures (38a, 38b) pour le passage dudit liquide à travers ladite partie creuse (36a).

7. Valve selon la revendication 1, dans laquelle ledit élément d'ajustement (48) est prévu extérieurement avec un filetage et peut tourner afin de modifier la position axiale de l'élément d'ajustement par rapport à la valve (10).

8. Machine pour la préparation de boissons, tel que du café comprenant une conduite d'alimentation (C1, C2) d'un liquide sous pression ayant, intercalée à l'intérieur de cette dernière, une valve de régulation de pression (10) selon l'une quelconque des revendications 1 à 7.
